# EUROPÄISCHE PATENTSCHRIFT

(11) **EP 2 848 661 B1**
(45) Veröffentlichungstag und Bekanntmachung des Hinweises auf die Patenterteilung: **04.11.2020**
(21) Anmeldenummer: 14185063.6
(22) Anmeldetag: 17.09.2014
(51) Int. Cl.: C09D 11/322, C09K 11/00

(54) **Mittel und flüssiges Gemisch zum optischen Markieren von Gegenständen und Personen sowie dessen Herstellung und Verwendung**
Means and liquid mixture for visual marking objects and people and the production and use thereof
Agent et mélange liquide destinés à marquer optiquement des objets et des personnes et leur fabrication et utilisation

(30) Priorität: 17.09.2013 DE 102013110236
(43) Veröffentlichungstag der Anmeldung: 18.03.2015
(73) Patentinhaber: Metzger, Sebastian G., 91126 Schwabach (DE)
(72) Erfinder: Metzger, Sebastian G., 91126 Schwabach (DE)
(74) Vertreter: Rupprecht, Kay

(56) Entgegenhaltungen:
- WO-A1-2004/101890
- WO-A1-2008/012225
- US-A- 3 693 166
- US-A- 5 554 842
- US-A1- 2005 279 248
- US-A1- 2011 095 232

## Beschreibung

Die Erfindung betrifft ein Mittel zum optischen Markieren von Personen und Gegenständen sowie dessen Verwendung. Die Erfindung betrifft insbesondere einen Stoff, der als ein Markierungsmittel dient, um Tatverdächtige und Tatwerkzeuge zu kennzeichnen.

Unter dem Begriff "Stoff" versteht der Fachmann Reinstoffe oder Gemische, wobei Gemische homogene Gemische wie z.B. Lösungen, Gasgemische und Legierungen und heterogene Gemische wie z.B. Schaum, Hartschaum, Aerosol (als Rauch oder Nebel), Suspensionen, Emulsionen oder Gemenge (Feststoffgemenge bzw. Feststoffgemisch) umfassen. Homogene Gemische sind auf molekularer Ebene vermischte Reinstoffe, also einphasig. Heterogene Gemische, auch Dispersionen genannt, sind nicht vollends vermischt, da die Reinstoffe in klar abgegrenzten Phasen vorliegen, also mehrphasig sind. Eine Dispersion besteht aus mindestens zwei Stoffen, die sich nicht oder kaum ineinander lösen oder chemisch miteinander verbinden. Dadurch bleiben auch die Eigenschaften der mindestens zwei vermischten Stoffe erhalten.

Die Notwendigkeit, eine Person oder einen Gegenstand mit einem Tatort oder Tathergang in Verbindung zu bringen, führt seit geraumer Zeit dazu, dass Stoffe zur Markierung bzw. Markierungsmittel verwenden werden. Sobald sich eine Person Zugang zu einem unerlaubten Ort verschafft oder mit einem Gegenstand wie z.B. Diebesgut oder Geldscheinen interagiert, werden zuvor platzierte Markierungsmittel aktiviert und verschossen bzw. versprüht. Die Markierungsmittel sind flüssig oder pulverförmig und verteilen sich bei ihrer Aktivierung auf der Person und dem Gegenstand. Die Markierung erleichtert der Polizei das Auffinden und das Identifizieren eines flüchtigen Tatverdächtigen und das Erkennen von Tat-/ Fluchtfahrzeugen sowie andere bei der Tat verwendete Gegenstände wie z.B. Werkzeuge. Zusätzlich wird der Justiz, insbesondere der Staatsanwaltschaft, die Beweisführung bei Gerichtsverfahren erleichtert.

Der Nachteil der aus dem Stand der Technik bekannten Markierungsmittel liegt darin, dass die Markierung offensichtlich ist. Regelmäßig wird ein farbiges Markierungsmittel mit z.B. violetter Farbe oder Neonfarbe verwendet, dessen Farbe mit bloßem Auge erkennbar und im Alltag ungewöhnlich und selten anzutreffen ist. Ein Passant würde die ungewöhnlichen Farben erkennen, sich leicht daran erinnern und könnte der Polizei Hinweise auf den Tatverdächtigen geben. Da der markierte Tatverdächtige bei seiner Flucht in der Öffentlichkeit nicht auffallen will, versucht er daraufhin, die Öffentlichkeit zu meiden und sich zu verstecken. Der Polizei wird somit ein Auffinden des Tatverdächtigen erschwert.

Auf Grund der Offensichtlichkeit von farbigen Markierungsmitteln ist ebenfalls keine verdeckte Ermittlung durch Strafverfolgungsbehörden möglich. Ein Täter würde die Markierung als solche und somit die Verfolgung z.B. durch die Polizei erkennen, seine geplanten Vorgehensschritte wie z.B. eine Übergabe von Geld oder Wertgegenständen unterbrechen und untertauchen.

Ein weiterer Nachteil bei den bekannten Markierungsmitteln betrifft dessen schwere Entfernbarkeit von mitmarkierten Gegenständen. Zum Beispiel Geldscheine, die neben einem Tatverdächtigen mit einer Farbe mitmarkiert wurden, sind von einem Geldinstitut nicht mehr ausgebbar und werden vernichtet. Insbesondere nicht wiederersetzbare Gegenstände wie z.B. Gemälde oder antike Bücher sind entweder durch die Markierung unrettbar beschädigt oder können nur durch aufwendige und teure Restaurierungsarbeiten von den Markierungsmitteln befreit und in ihren ursprünglichen Zustand versetzt werden.

Derzeitige Markierungsmittel umfassen auch sogenannte künstliche DNA (kDNA, künstliche Desoxyribonukleinsäure), die synthetisch hergestellte Oligonukleotiden beinhaltet. Die Oligonukleotide haften am Täter oder Tatwerkzeugen an und sind bereits in kleinsten Mengen durch Methoden der Polymerase-Kettenreaktion (PCR) nachweisbar.

Durch die künstliche Herstellung der Oligonukleotide ist zwar zum einen die Einzigartigkeit der kDNA sichergestellt, doch andererseits deren Produktion teuer. Die Oligonukleotide werden auch nicht derart verwendet, mit bloßem Auge erkennbar zu sein, sondern werden in geringen, durch die PCR nachweisbaren Mengen verwendet, um nicht offensichtlich zu sein.

Eine andere Methode basiert auf dem Verteilen mikroskopisch kleiner Plättchen, sogenannter Microdots. Diese Microdots sind kleine beschriftete Plättchen mit einer Größe von 0.1 bis 1 mm, deren Gravur sich unter einem Mikroskop auslesen lässt. Die Herstellung solcher Microdots bedarf technischer Geräte und ist ebenfalls teuer. Ein aus beiden Verfahren - kDNA und Microdots - kombiniertes Produkt wird als Microdot-Spray bezeichnet.

US2011/095232A1 beschreibt Phosphor- und fluoreszierende Zusammensetzungen und Verfahren zu ihrer Herstellung. Hierbei beinhaltet eine Zusammensetzung unter anderem einen Phosphor, der Strahlung in einem ersten Wellenlängenbereich emittiert, und ein fluoreszierendes Pigment, das Strahlung in einem zweiten Wellenlängenbereich fluoresziert. Der erste Wellenlängenbereich und der zweite Wellenlängenbereich sind im Wesentlichen gleich.

US5554842A bezieht sich auf ein Postkennzeichen, wobei Tinte zum Drucken von Teilen der Kennzeichnungen verwendet wird. Die Tinte ist fluoreszierend für den konventionellen Kennzeichnungsdruck und fluoreszierend und phosphoreszierend für den wertschöpfenden Bitmap-Druck.

WO2004/101890A1 beschreibt eine flache doppelte Sicherheitsmarke, die aus zwei verschiedenen Sicherheitselementen besteht, von denen eines im sichtbaren Spektralbereich und das andere im ultravioletten Spektralbereich des Lichts überprüft werden kann. Das Sicherheitszeichen umfasst plattenförmige Effektpigmente und Leuchtpigmente in einer so geringen Konzentration, dass diese mit bloßem Auge unter Einwirkung von UV-Licht als einzelne Partikel erkennbar sind.

Aufgabe der vorliegenden Erfindung ist es, ein kostengünstiges Mittel zum optischen Markieren von Personen und Gegenständen anzugeben, das vielfältig anwendbar ist und mit bloßem Auge, d.h. bei Tageslicht und/oder ohne technische Hilfsmitteln wie z.B. Polarisationsbrille oder UV-Lampe, und/oder mit leicht verfügbaren und kostengünstigen technischen Hilfsmitteln erkennbar und identifizierbar ist.

Diese Aufgabe wird erfindungsgemäß durch ein Mittel zum optischen Markieren von Gegenständen und Personen gemäß dem unabhängigen Anspruch 1 gelöst. Im Detail wird ein Mittel zum optischen Markieren von Gegenständen und Personen, aus einem Pulver aus mindestens einem ersten Stoff mit Tagesleucht-Pigmenten, einem zweiten Stoff mit Schwarzlicht-Pigmenten, und einem dritten Stoff mit Effekt-Pigmenten bereitgestellt. Hierbei sind die Pigmente farbgebende Substanzen, die in einem Anwendungsmedium unlöslich sind. Die Tagesleucht-Pigmente sind ausgebildet, bei Tageslicht und/oder bei blauem Licht von Rundumkennleuchten eines Einsatzfahrzeugs zu fluoreszieren. Die Schwarzlicht-Pigmente sind ausgebildet, bei UV-Licht von technischen Hilfsmitteln, insbesondere Schwarzlicht, zu fluoreszieren. Die Effekt-Pigmente sind derart ausgebildet, sichtbares Licht zu reflektieren und im Vergleich zu den anderen Pigmenten des Feststoffgemisches die größte Dichte aufzuweisen, wobei die Effekt-Pigmente Polyester-Glitter mit einer Korngröße von vorzugsweise 100 µm beinhalten.

Ein erster Vorteil liegt in den Tagesleucht-Pigmenten und den Schwarzlicht-Pigmenten, die zu den Leuchtpigmenten zählen und die mehr Licht im sichtbaren Bereich reemittieren, als eingestrahlt wird. Dieser Effekt wird auch als Lumineszenz bezeichnet. Dies unterscheidet Leuchtpigmente von allen anderen Pigmentarten (Weißpigmente, Schwarzpigmente, Buntpigmente und Effektpigmente).

Unter dem Begriff "Pigmente" sind farbgebende Substanzen zu verstehen, die im Gegensatz zu Farbstoffen in einem Anwendungsmedium unlöslich sind. Ein Anwendungsmedium bezeichnet dabei den Stoff, in den das Pigment eingearbeitet wird, beispielsweise in Lack oder in Kunststoffe. Die hier beschriebenen Leuchtpigmente werden auch als Fluoreszenzpigmente bezeichnet und weisen ein Nachleuchten kürzer als eine Tausendstel Sekunde auf, das auch als Fluoreszieren bezeichnet wird. Diese Leuchtpigmente leuchten im Gegensatz zu Nachleuchtpigmenten nicht nach und fallen somit dem Täter im Dunkeln nicht auf. Andererseits reagieren diese Leuchtpigmente sofort auf einfallendes Licht, insbesondere auf Licht bestimmter Wellenlänge, und leuchten kräftig im sichtbaren optischen Spektrum, wodurch eine Identifizierung eines markierten Gegenstands oder einer Person bei einer Überprüfung erleichtert wird.

Ein weiterer Vorteil des erfindungsgemäßen Mittels sind dessen besondere optische Eigenschaften bei Beleuchtung mit Blau-, Schlag- und/oder Schwarzlicht, die im Folgenden erläutert werden:
Unter "Blaulicht" wird blaues Licht verstanden, das insbesondere von Rundumkennleuchten von Einsatzfahrzeugen (auch Blaulicht genannt) ausgestrahlt wird. Die speziellen Tagesleucht-Pigmente wirken unter Beleuchtung mit Licht hohen Blauanteils besonders intensiv und fallen dadurch besonders gut auf. Je blauer das einfallende Licht ist, desto intensiver ist die Farbwirkung. Die Tagesleucht-Pigmente selbst besitzen keine aktiven Leuchteigenschaften, sondern werden durch das einfallende Licht angeregt und strahlen ein gleichwelliges oder längerwelligeres Licht ab. Es existieren Tagesleucht-Pigmente, die bei Tageslicht wie "Neonfarben" wirken und somit den Tatverdächtigen schon bei Tageslicht sehr deutlich markieren. Tagesleucht-Pigmente können bei Bestrahlung in rot, orange, gelb, grün, blau oder weiß leuchten. Die maximale Leucht-/ Farbwirkung entfalten die Tagesleucht-Pigmente bei Beleuchtung mit monochromatischem, vorzugsweise blauem Licht, beispielsweise dem Blaulicht von Einsatzfahrzeugen. Die Tagesleucht-Pigmente können derart ausgebildet sein, um vorzugsweise nur bei Blaulicht oder am stärksten bei Blaulicht und/oder bei UV-Licht oder bei Tageslicht und/oder bei UV-Licht und/oder Blaulicht zu fluoreszieren.

Unter "Schlaglicht" versteht der Fachmann ein intensives Licht, insbesondere ein intensives, monochromatisches Licht, unter dem die Effekt-Pigmente das einfallende Licht besonders stark reflektieren und somit glitzern. Der Effekt ist insbesondere bei kaltweißem LED-Licht (Taschenlampen) festzustellen. Verstärkt wird der Effekt durch optional beimischbare farbige Effekt-Pigmente, welche in den Farben weiß, rot und grün glitzern können. Effektpigmente werden in Metalleffektpigmente und spezielle Effektpigmente eingeteilt. Metalleffektpigmente sind Glanzpigmente aus Metall, deren Plättchen einen durch Reflexion des Lichts an den Metallplättchen erzeugten, metallähnlichen Effekt zeigen. Wichtige Metalleffektpigmente sind Aluminium-, Messing- und Kupferplättchen. Perlglanzpigmente und Interferenzpigmente werden unter dem Begriff spezielle Effektpigmente zusammengefasst. Perlglanzpigmente sind Effektpigmente, die aus transparenten Plättchen mit hoher Brechzahl bestehen. Sie erzeugen durch Mehrfachreflexion einen perlenähnlichen Effekt. Interferenzpigmente sind Effektpigmente, deren farbgebende Wirkung ganz oder vorwiegend auf Interferenz beruht. Interferenzpigmente können auf transparenten oder nichttransparenten Plättchen basieren. Metalloxidbeschichtete Glimmerpigmente gehören je nach Art und Dicke der Beschichtung zu den Perlglanz- oder zu den Interferenzpigmenten. Zu den Perlglanzpigmenten zählen Fischsilber, basisches Bleicarbonat, Wismutoxidchlorid und plättchenförmiges Eisenoxidrot. Zu den Interferenzpigmenten zählen plättchenförmiges Titandioxid, plättchenförmige organische Pigmente, Metalloxid-Glimmerpigmente, Aluminiumoxid-Flakes, Borosilikat-Flakes, Siliciumdioxid-Flakes, metalloxidbeschichtete Metallplättchen, Multischichtpigmente (Fabry-Perot-Struktur), Flüssigkristallpigmente und strukturierte Effektpigmente.

Der Begriff "Schwarzlicht" ist eine umgangssprachliche Bezeichnung für UV-Strahlung, insbesondere UV-A-Strahlung, und wird sowohl in Diskotheken als Umgebungslicht, aber auch bei Polizeikontrollen verwendet. Die Schwarzlicht-Pigmente nehmen die UV-Strahlung auf und strahlen es als sichtbares Licht wieder ab. Licht, das eine längere Wellenlänge als UV-Strahlung hat und auf Schwarzlicht-Pigmente gestrahlt wird, regt die Schwarzlicht-Pigmente kaum oder gar nicht an. Das reflektierte Licht von Schwarzlicht-Pigmenten bei Tageslicht ist im Vergleich zu Tagesleucht-Pigmenten somit nicht intensiver. Daher kann man Schwarzlicht-Pigmente auch als "unsichtbare" Pigmente für Tageslicht bezeichnen.

Ein weiterer Vorteil des erfindungsgemäßen Mittels ist die Haftbarkeit an den meisten Oberflächen und Materialien. Die Tagesleucht-Pigmente haften sehr gut an Textilien jeglicher Art. Somit ist die Wahrscheinlichkeit, dass ein Fluchtfahrzeug kontaminiert wird, sehr hoch. Sollte ein Tatverdächtiger zufällig einer allgemeinen Verkehrskontrolle unterzogen werden, besteht die Möglichkeit, dass durch den Blaulichteinsatz der markierte Sitz und/ oder Sicherheitsgurt farbig leuchtet. Auch eine Kreuzkontamination vom Sitz/ Sicherheitsgurt auf nicht markierte Kleidung ist denkbar. Die Effekt-Pigmente übertragen sich ebenfalls sehr leicht auf Textilien und weisen eine hohe Anhaftung auf. Das restlose Reinigen ist äußerst schwierig. Die Schwarzlicht-Pigmente haften sehr gut auf Haaren, Haut und Textilien. Sie dienen der mittelfristigen, bis zu zwei/ drei Tage andauernden Markierung des Tatverdächtigen, ohne dass dieser die Markierung bemerkt. Somit kann der Tatverdächtige auch nach einem gewissen Zeitraum noch mit dem Tatort in Verbindung gebracht werden, selbst wenn er die blaulicht-und schlaglichtaktiven Pigmente abwaschen konnte.

Ein weiterer Vorteil des erfindungsgemäßen Mittels liegt in den Effekt-Pigmenten, die eine größere Dichte, vorzugsweise die größte Dichte im Feststoffgemisch, im Vergleich zu den anderen Pigmenten und/oder Stoffen aufweisen. Beim Verschuss des Mittels werden die anderen Pigmente und/oder Stoffe durch die Effekt-Pigmente zusätzlich mit aufgewirbelt und es wird eine größere Verteilung des Mittels und eine oberflächenmäßig umfassendere Markierung eines Gegenstands oder einer Person ermöglicht. Des Weiteren wird die Reichweite des Mittels durch die Effekt-Pigmente erhöht, da die Effekt-Pigmente eine höhere Dichte aufweisen und im Vergleich zu den Stoffen mit den Tagesleucht-Pigmenten und den Schwarzlicht-Pigmenten nicht so leicht in der Luft abgebremst werden.

Vorteilhafte Weiterbildungen der Erfindung sind in den Unteransprüchen angegeben.

Daher können die Tagesleucht-Pigmente vorzugsweise derart ausgebildet sein, in mindestens einer der Farben rot, orange, gelb, grün, blau oder weiß zu fluoreszieren, und die Schwarzlicht-Pigmente derart ausgebildet sein, in mindestens einer der Farben rot, gelb, grün oder blau zu fluoreszieren. Ein Pigment kann vorzugsweise nur in einer Farbe leuchten, weshalb bei einer Farbleuchtkombination z.B. verschiedenfarbig leuchtende Tagesleucht-Pigmente vorhanden sein können. Diese Ausführungsform hat den Vorteil, den Markierungseffekt durch kontrastreiche und/oder auffällige Farben und/oder Farbkombinationen zu verstärken.

In einer weiteren Ausführungsform des Mittels bestehen der erste und der zweite Stoff aus bzw. beinhalten zumindestens Triazin-Toluolsulfonamid-Paraformaldehyd Polykondensationsharz zuzüglich der zuvor genannten Pigmente; der dritte Stoffe besteht aus bzw. beinhaltet zumindestens die Effekt-Pigmenten. Der Vorteil von Triazin-Toluolsulfonamid-Paraformaldehyd Polykondensationsharz liegt darin, dass es ein Anwendungsmedium ist, in das die Pigmente eingearbeitet sind, und für Personen oder Tiere weder bei Hautkontakt noch beim Einatmen gesundheitsgefährdend ist. Des Weiteren dient das Anwendungsmedium der statistischen, d.h. gleichmäßigen, Verteilung der Pigmente. Je mehr Pigmente in einem Anwendungsmedium eingearbeitet werden, desto stärker sind die Pigmentfarben bzw. das Leuchten der Pigmente. Zwar können die Effekt-Pigmente ebenfalls in einem Anwendungsmedium eingearbeitet sein, doch ohne ein Anwendungsmedium ist die Reflexion von Licht an den Effekt-Pigmenten um einiges stärker und das reflektierte Licht gebündelter.

Die Effekt-Pigmente können aus Eisen(III)Oxid Fe₂O₃ bestehen bzw. dieses zumindestens beinhalten. In einer möglichen Ausführungsform werden die Effekt-Pigmente, insbesondere das Eisen(III)Oxid, in Form von Hämatitpulver mit einer Korngröße von 0-63 µm gebildet. Eisen(III)Oxid ist ebenfalls nicht gesundheitsgefährdend und, so wie Hämatitpulver, kostengünstig im Handel erhältlich.

Vorteilhafterweise bestehen die Effekt-Pigmente aus Polyester-Glitter mit einer Korngröße von vorzugsweise 100 µm. Andererseits können die Effekt-Pigmente neben dem Eisen(III)Oxid Fe₂O₃ zusätzlich Polyester-Glitter beinhalten. Polyester-Glitter reflektieren Tageslicht besonders gut, wobei das reflektierte Licht weiß, grün und/oder rot erscheinen kann.

In weiteren vorteilhaften Ausführungsformen des Mittels zum optischen Markieren von Gegenständen und Personen bestehen oder weisen die Tagesleucht-Pigmente sogenannte "Holifarben" auf. Diese Holifarben können auch alternativ oder zusätzlich zu den Tagesleucht-Pigmenten in den anderen Ausführungsformen verwendet werden. Holifarben bestehen z.B. aus Maisstärke oder Reismehl und Lebensmittelfarben und sind günstig und einfach herstellbar, "nichtstaubexplosionsfähig", biologisch abbaubar und leicht, z.B. nur mit Wasser und ohne Reinigungsmittel, auswaschbar. Holifarben können die gleichen Farben wie die zuvor beschriebenen Tagesleucht-Pigmente haben, insbesondere neofarben sein bzw. eine hohe Leuchtkraft haben.

Auf Grund verschiedener Zusammensetzungen des Feststoffgemisches kann das Mittel für verschiedene Einsatzmöglichkeiten verwendet werden, die im Folgenden beschrieben werden:
In einer vorteilhaften Ausführungsform besteht das Feststoffgemisch aus 30g des ersten Stoffs mit weiß leuchtenden Tagesleucht-Pigmenten, mindestens 5g des zweiten Stoffs mit Schwarzlicht-Pigmenten, und 60g des dritten Stoffs mit Effekt-Pigmenten.

Dadurch erscheint das Mittel bei Tageslicht als weißes und in verwirbeltem Zustand bzw. auf Oberflächen verteiltes kaum sichtbares Pulver bzw. Puder. Die Effekt-Pigmente reagieren hauptsächlich auf Schlaglicht und die Schwarzlicht-Pigmente auf UV-Licht, weshalb sie bei Tageslicht kaum sichtbar sind. Die Tagesleucht-Pigmente leuchten bei Tageslicht weiß und sind bei dieser Konzentration im Mittel mit bloßem Auge kaum oder gar nicht erkennbar. Somit ist diese Ausführungsform besonders für verdeckte Ermittlungen geeignet und reagiert lediglich bzw. mindestens hauptsächlich auf Schwarzlicht. Das Feststoffgemisch ist nicht auf insgesamt 95g beschränkt, sondern kann anteilsmäßig mit 30/95, 5/95 und 60/95 aus den zuvorgenannten Stoffen zusammengesetzt sein. Ebenso müssen die Anteile bzw. Gewichtsangaben nicht exakt eingehalten werden und können um 1-2% bzw. 1-2g variieren. Die Zusammensetzung kann auch aus 5/15 des ersten Stoffs, 1/15 des zweiten Stoffs und 9/15 des dritten Stoffs bestehen. Der zweite Stoff sollte mindestens 5g wiegen, insbesondere bei den zuvor genannten 95g Gesamtgewicht, damit der Effekt der Schwarzlicht-Pigmente bei UV-Licht gut sichtbar ist. Der Anteil der Schwarzlicht-Pigmente kann in verschiedenen Ausführungsformen bis auf die Hälfte des Gesamtgewichts des Feststoffgemisches steigen, um deren Effekt zu verstärken. Andererseits ist eine derart große Menge bzw. hoher Anteil der Schwarzlicht-Pigmente auf Grund deren hohen Kosten pro Kilogramm im Vergleich zu den (niedrigeren) Kosten pro Kilogramm der anderen im Feststoffgemisch vorhandenen Pigmente mit Bedacht bzw. nur für besondere Anwendungen zu wählen.

In einer weiteren vorteilhaften Ausführungsform besteht das Feststoffgemisch aus 15g des ersten Stoffs mit weiß leuchtenden Tagesleucht-Pigmenten, 2g bis 5g des ersten Stoffs mit rot, orange, gelb, grün und/oder blau leuchtenden Tagesleucht-Pigmenten, mindestens 5g des zweiten Stoffs mit Schwarzlicht-Pigmenten, und 60g des dritten Stoffs mit Effekt-Pigmenten.

Diese Ausführungsform ist besonders für den Innenbereich von Gebäuden und für Wohn- oder Geschäftsräume geeignet, da das Mittel bereits bei Tageslicht sichtbar farbig ist und dennoch kaum schwer entfernbare Verschmutzung in den Gebäuden und Räumen hinterlässt. Die geringe Menge der farbigen Tagesleucht-Pigmente ist mit bloßem Auge sichtbar, aber bei einer Reinigung der Räume von Wänden und Gegenständen entfernbar. Auch in dieser Ausführungsform ist das Feststoffgemisch auf Grund der Gewichtsangaben der einzelnen Stoffe nicht auf ein bestimmtes Gesamtgewicht beschränkt. Stattdessen können die Gewichtsangaben auch als Anteile der zuvor genannten Stoffe gelesen werden und die zuvor genannten Abweichungen beinhalten.

In einer weiteren vorteilhaften Ausführungsform besteht das Feststoffgemisch aus 15g des ersten Stoffs mit weiß leuchtenden Tagesleucht-Pigmenten, 5g bis 15g des ersten Stoffs mit rot, orange, gelb, grün und/oder blau leuchtenden Tagesleucht-Pigmenten, mindestens 5g des zweiten Stoffs mit Schwarzlicht-Pigmenten, und 60g des dritten Stoffs mit Effekt-Pigmenten.

Diese Ausführungsform ist besonders für den Außenbereich bzw. außerhalb von Gebäuden geeignet. Das Mittel ist sichtbar farbig und hinterlässt eine schwer entfernbare Markierung bzw. Verschmutzung in Gebäuden und Räumen. Insbesondere die große Menge der farbigen Tagesleucht-Pigmente ist bei einer Reinigung schwer von Wänden und Gegenständen entfernbar. Auch in dieser Ausführungsform ist das Feststoffgemisch auf Grund der Gewichtsangaben der einzelnen Stoffe nicht auf ein bestimmtes Gesamtgewicht beschränkt. Stattdessen können die Gewichtsangaben auch als Anteile der zuvor genannten Stoffe gelesen werden und die zuvor genannten Abweichungen beinhalten.

Zusätzlich sei erwähnt, dass die Effekt-Pigmente vorzugsweise den Hauptbestandteil des Feststoffgemisches ausmachen, um die zuvor genannten Effekte wie die Verwirbelung der Tagesleucht-Pigmente und der Schwarzlicht-Pigmente und die Erhöhung der Reichweite des Mittels zu verbessern. Ebenso sei erwähnt, dass das Mittel, insbesondere das Feststoffgemisch, vorzugsweise als Pulver bzw. Puder ausgebildet ist.

Vorteilhafterweise beinhaltet das Feststoffgemisch mindestens einen weiteren Stoff, der als Duftstoff wirkt und nicht/ kaum von Menschen, aber von Hunden und/oder technischen Geräten detektierbar ist. Einsatzkräfte wie z.B. die Polizei verwenden bei der Verfolgung von Tatverdächtigen abgerichtete Hunde und deren trainierten Geruchssinn. Da der Duftstoff bekannt ist und dem Hund gleich vorgelegt werden kann, kann ein Hund die Fährte des Tatverdächtigen sofort wittern und verfolgen.

Des Weiteren wird als Beispiel ein flüssiges Gemisch beschrieben, auch als Gel bezeichenbar, das zum optischen Markieren von Gegenständen und Personen verwendet wird. Das flüssige Gemisch bzw. das Gel besteht anteilsmäßig aus 50% Weißöl, 40% Isopropanol-(II), 9,9% Wasser und 0,1% Emulgator. Zusätzlich wird das zuvor genannte, erfindungsgemäße Mittel hinzugefügt und in der Emulsion dispergiert, wobei das Mittel keinen dritten Stoff mit Effekt-Pigmenten aufweisen kann.

Das Gel ist speziell für die Absicherung von Außenanlagen geeignet und zeichnet sich durch eine besonders intensive Haftfähigkeit auf Textilien aus. Der hohe Alkoholanteil des Gels dient als Frostschutzmittel. Ein weiterer Vorteil des Gels liegt in seiner Anwendungsreichweite. Während das erfindungsgemäße Mittel durch eine Gasdruckentladung 3m weit verschossen werden kann, kann das Gel mittels einer Pumpe 10m weit verteilt werden. Daher müssen auch keine Effekt-Pigmente in das Gel notwendigerweise eingearbeitet werden. Des Weiteren ist die Leuchtkraft der Pigmente im feuchten Gel bei Blaulicht um ein Vielfaches höher als bei trockenen Pigmenten.

Der Begriff "Weißöle" bezeichnet Paraffinöle, wobei man zwischen den technischen und den besonders hochwertigen medizinischen Weißölen unterscheidet. Weißöle in medizinischer Qualität werden in der Pharmazie oder Kosmetik eingesetzt und müssen sehr hohe Anforderungen an Reinheit und Verträglichkeit erfüllen. Diese medizinischen Weißöle sind auch farblos, geruchs-und geschmacksfrei; sie enthalten keine Aromaten und keine Schwefelverbindungen. Das erfindungsgemäße flüssige Gemisch beinhaltet vorzugsweise medizinische Weißöle und ist somit nicht gesundheitsgefährdend.

Das erfindungsgemäße Mittel wird dadurch hergestellt, dass der erste Stoff mit den Tagesleucht-Pigmenten, der zweite Stoff mit den Schwarzlicht-Pigmenten und der dritte Stoffe mit den Effekt-Pigmenten trocken, vorzugsweise in einer Trommel, miteinander vermischt werden. Dieses Herstellungsverfahren ist kostengünstig und einfach durchzuführen. Es bedarf des Weiteren keiner teuren Herstellungsgeräte und keiner hochhygienischen Herstellungsräume.

Die erfindungsgemäße Verwendung des erfindungsgemäßen Mittels zum optischen Markieren von Gegenständen und Personen hat den Vorteil, dass das Mittel nicht nur auf Schlaglicht, Tageslicht und Schwarzlicht, sondern insbesondere intensiv auf Blaulicht reagiert und leuchtet. Dadurch müssen Einsatzkräfte keine zusätzlichen technischen Detektionsgeräte mit sich führen, sondern können das Blaulicht des Einsatzwagens bei der Identifizierung des Tatverdächtigen oder des Fluchtfahrzeugs zu Hilfe nehmen und nutzen.

Vorteilhafterweise wird das erfindungsgemäße Mittel durch eine Gasdruckentladung, insbesondere eine CO₂ Druckentladung, verschossen und somit verteilt. Die Druckentladung ist derart ausgebildet, dass keine heißen Gase und Funken wie bei einer Explosion bzw. Detonation entstehen und somit ein Verbrennen von Haut oder Entzünden von Textilien oder Gegenständen vermieden wird. Die Verwendung des Mittels ist somit bei Personen und Tieren nicht gesundheitsgefährdend sowie innerhalb von Räumen möglich. Durch den Ausstoß des Mittels unter Druck sind auch eine bessere Verteilung des Mittels, insbesondere des Feststoffgemisches, und ein besseres Eindringen in Textilien und Anhaften auf der Haut möglich.

Als weitere Ausgestaltungsmöglichkeit bei der Verwendung des erfindungsgemäßen Mittels können die Tagesleucht-Pigmente und/oder die Schwarzlicht-Pigmente eine bestimmte Farbkombination aufweisen, um eine Zugehörigkeit oder eine Herkunft des Mittels zu identifizieren. So könnte z.B. die Farbkombination gelb und rot auf private Gebäude und blau und orange auf öffentliche Gebäude hinweisen. Dadurch wird eine Zuordnung einer Person und eines Gegenstand zu einer bestimmten Tat oder einem bestimmten Tatort erleichtert. Möglich ist auch, dass die Tagesleucht-Pigmente und die Schwarzlicht-Pigmente die gleiche oder unterschiedliche Farbkombination aufweisen.

Das erfindungsgemäße Mittel kann in Gasdruckpatronen ausgebildet sein, wobei die Feststoffmenge ein Gewicht von vorzugsweise 85g aufweist. Weitere Einsatzmöglichkeiten des erfindungsgemäßen Mittels können gasbetriebene Minen und Wurfkörper umfassen. Das erfindungsgemäße Mittel als auch das flüssige Gemisch können als Zusatz bei Wasserwerfern eingesetzt werden, um im Nachgang Tatverdächtige mittels Schwarzlicht zu identifizieren.

Vorrichtungen wie Minen und dergleichen, die das erfindungsgemäße Mittel oder das flüssige Gemisch verschießen und/oder verteilen, können an Türen, Fenstern, Safes und anderen sicherungsbedürftigen Orten und Gegenständen anordbar sein und bei Alarm bzw. Aktivierung durch Lichtschranken, Stolperdrähten oder anderen Sensoren ausgelöst werden.

Das erfindungsgemäße Mittel ist nicht auf die zuvor genannten Ausführungsformen beschränkt. Diese Ausführungsformen können untereinander kombiniert werden, insbesondere um besondere Effekte zu erhalten bzw. diese hervorzuheben oder zu verstärken. Das gleiche gilt für die Ausführungsformen des erfindungsgemäßen flüssigen Gemisches.

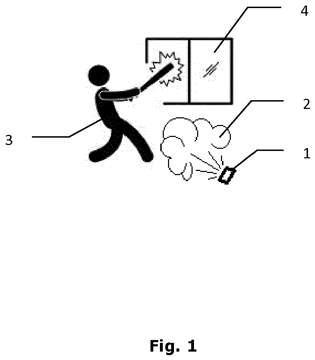

Figur 1 zeigt eine beispielhafte Darstellung eines Einbruchs in Form eines Piktogramms, bei der eine durch einen Sensor beim bzw. am Fenster 4 aktivierte, auf dem Boden angeordnete Vorrichtung 1 das erfindungsgemäße Mittel 2 verschießt und auf dem Einbrecher 3 verteilt.

## Patentansprüche

1. Ein Mittel zum optischen Markieren von Gegenständen und Personen,
aus einem Pulver aus mindestens
einem ersten Stoff mit Tagesleucht-Pigmenten,
einem zweiten Stoff mit Schwarzlicht-Pigmenten, und
einem dritten Stoff mit Effekt-Pigmenten,
wobei die Pigmente farbgebende Substanzen sind, die in einem Anwendungsmedium unlöslich sind,
wobei die Tagesleucht-Pigmente derart ausgebildet sind, bei Tageslicht und/oder bei blauem Licht von Rundumkennleuchten eines Einsatzfahrzeugs zu fluoreszieren,
wobei die Schwarzlicht-Pigmente derart ausgebildet sind, bei UV-Licht von technischen Hilfsmitteln, insbesondere Schwarzlicht, zu fluoreszieren,
wobei die Effekt-Pigmente derart ausgebildet sind, sichtbares Licht zu reflektieren und im Vergleich zu den anderen Pigmenten des Feststoffgemisches die größte Dichte aufzuweisen, und
wobei die Effekt-Pigmente Polyester-Glitter mit einer Korngröße von vorzugsweise 100 µm beinhalten.

2. Ein Mittel nach Anspruch 1,
**dadurch gekennzeichnet,**
**dass** der erste und zweite Stoff Triazin-Toluolsulfonamid-Paraformaldehyd Polykondensationsharz enthält und der dritte Stoffe aus den Effekt-Pigmenten besteht.

3. Ein Mittel nach Anspruch 1 oder 2,
**dadurch gekennzeichnet,**
**dass** die Effekt-Pigmente Eisen(III)Oxid Fe₂O₃ beinhalten, insbesondere Hämatit mit einer Korngröße von 0-63 µm.

4. Ein Mittel nach einem der Ansprüche 1 bis 3,
**dadurch gekennzeichnet,**
**dass** die Effekt-Pigmente Polyester-Glitter mit einer Korngröße von 100 µm beinhalten.

5. Ein Mittel nach einem der Ansprüche 1 bis 4,
**dadurch gekennzeichnet,**
**dass** das Pulver mindestens einen weiteren Stoff als Duftstoff enthält.

6. Ein Mittel nach einem der Ansprüche 1 bis 5,
**dadurch gekennzeichnet,**
**dass** das Mittel mittels einer Mischvorrichtung, in der die drei Stoffe des Mittels trocken miteinander vermischt werden, herstellbar ist.

7. Verwendung eines Mittels zum optischen Markieren von Gegenständen und Personen,
**dadurch gekennzeichnet, dass**
das Mittel aus einem Pulver besteht, aus mindestens
einem ersten Stoff mit Tagesleucht-Pigmenten,
einem zweiten Stoff mit Schwarzlicht-Pigmenten, und
einem dritten Stoff mit Effekt-Pigmenten,
wobei die Pigmente farbgebende Substanzen sind, die in einem Anwendungsmedium unlöslich sind,
wobei die Tagesleucht-Pigmente derart ausgebildet sind, bei Tageslicht und/oder bei blauem Licht von Rundumkennleuchten eines Einsatzfahrzeugs zu fluoreszieren,
wobei die Schwarzlicht-Pigmente derart ausgebildet sind, bei UV-Licht von technischen Hilfsmitteln, insbesondere Schwarzlicht, zu fluoreszieren, und
wobei die Effekt-Pigmente derart ausgebildet sind, sichtbares Licht zu reflektieren und im Vergleich zu den anderen Pigmenten des Feststoffgemisches die größte Dichte aufzuweisen.

8. Verwendung nach Anspruch 7,
**dadurch gekennzeichnet,**
**dass** das Mittel durch eine CO2 Druckentladung verteilbar ist.

9. Verwendung nach Anspruch 7 oder 8,
**dadurch gekennzeichnet,**
**dass** zur Identifizierung einer Zugehörigkeit oder einer Herkunft des Mittels die Tagesleucht-Pigmente und/oder die Schwarzlicht-Pigmente eine bestimmte Farbkombination aufweisen.

10. Verwendung nach einem der Ansprüche 7 bis 9,
**dadurch gekennzeichnet,**
**dass** das Mittel durch eine Vorrichtung verschießbar und/oder verteilbar ist, die bei Aktivierung durch eine Lichtschranke, einen Stolperdraht oder einen anderen Sensor auslösbar ist.

11. Verwendung nach einem der Ansprüche 7 bis 10 zum Kennzeichnen und Identifizieren von Orten, Fahrzeugen, Werkzeugen, Personen und/oder Sachen.

## Claims

1. A means for the visual marking of objects and persons made of a powder of at least
a first substance having daylight pigments,
a second substance having black light pigments, and
a third substance having effect pigments,
wherein the pigments are chromophoric substances which are insoluble in an application medium,
wherein the daylight pigments are designed to fluoresce in daylight and/or blue light from rotating beacons of an emergency vehicle,
wherein the black light pigments are designed to fluoresce in UV light with technical aids, in particular black light,
wherein the effect pigments are designed to reflect visible light and have the greatest density compared to the other pigments of the solid mixture, and
wherein the effect pigments contain polyester glitter at a particle size of preferably 100 µm.

2. A means according to claim 1,
**characterized in that**
the first and second substance contain triazine-toluene sulfonamide-paraformaldehyde polycondensation resin and the third substance consists of the effect pigments.

3. A means according to claim 1 or 2,
**characterized in that**
the effect pigments contain iron (III) oxide Fe₂O₃, particular hematite having a particle size of 0-63 µm.

4. A means according to one of claims 1 to 3,
**characterized in that**
the effect pigments contain polyester glitter at a particle size of 100 µm.

5. A means according to one of claims 1 to 4,
**characterized in that**
the powder contains at least one further substance as a fragrance.

6. A means according to one of claims 1 to 5,
**characterized in that**
the means is producible using a mixing device in which the three substances of the means are dry mixed together.

7. Use of a means for the visual marking of objects and persons,
**characterized in that**
the means consists of a powder of at least
a first substance having daylight pigments,
a second substance having black light pigments, and
a third substance having effect pigments,
wherein the pigments are chromophoric substances which are insoluble in an application medium,
wherein the daylight pigments are designed to fluoresce in daylight and/or blue light from rotating beacons of an emergency vehicle,
wherein the black light pigments are designed to fluoresce in UV light with technical aids, in particular black light, and
wherein the effect pigments are designed to reflect visible light and have the greatest density compared to the other pigments of the solid mixture.

8. The use according to claim 7,
**characterized in that**
the means is spread by pressurized CO2 discharge.

9. The use according to claim 7 or 8,
**characterized in that**
the daylight pigments and/or the black light pigments have a specific color combination in order to identify an association or origin of the means.

10. The use according to one of claims 7 to 9,
**characterized in that**
the means can be fired and/or spread by a device able to be triggered when activated by a light barrier, a trip wire or other sensor.

11. The use according to one of claims 7 to 10 for marking and identifying locations, vehicles, tools, persons and/or items.

## Revendications

1. Agent pour le marquage optique d'objets et de personnes, constitué d'une poudre comprenant au moins
une première substance avec des pigments réagissant à la lumière du jour, une deuxième substance avec des pigments réagissant à la lumière noire et une troisième substance avec des pigments à effets,
dans lequel les pigments sont des substances colorantes qui sont insolubles dans un milieu d'application,
dans lequel les pigments réagissant à la lumière du jour sont conçus pour être fluorescents sous la lumière du jour et/ou sous la lumière bleue des gyrophares d'un véhicule d'intervention,
dans lequel les pigments réagissant à la lumière noire sont conçus pour être fluorescents sous la lumière UV des aides techniques, en particulier la lumière noire,
dans lequel les pigments à effets sont conçus pour réfléchir la lumière visible et présenter la plus grande densité par rapport aux autres pigments du mélange de matières solides, et
dans lequel les pigments à effets contiennent des paillettes de polyester ayant une taille de grain de préférence de 100 µm.

2. Agent selon la revendication 1,
**caractérisé en ce**
**que** les première et deuxième substances contiennent une résine de polycondensation triazine-toluènesulfonamide-paraformaldéhyde et la troisième substance est constituée des pigments à effets.

3. Agent selon la revendication 1 ou 2,
**caractérisé en ce**
**que** les pigments à effets contiennent de l'oxyde de fer(III) Fe₂O₃, en particulier de l'hématite ayant une taille de grain de 0 à 63 µm.

4. Agent selon l'une des revendications 1 à 3,
**caractérisé en ce**
**que** les pigments à effets contiennent des paillettes de polyester ayant une taille de grain de 100 µm.

5. Agent selon l'une des revendications 1 à 4,
**caractérisé en ce**
**que** la poudre contient au moins une autre substance sous forme de substance odorante.

6. Agent selon l'une des revendications 1 à 5,
**caractérisé en ce**
**que** l'agent peut être préparé au moyen d'un dispositif de mélange dans lequel les trois substances de l'agent sont mélangées à sec les unes avec les autres.

7. Utilisation d'un agent pour le marquage optique d'objets et de personnes,
**caractérisée en ce que**
l'agent est constitué d'une poudre comprenant au moins une première substance avec des pigments réagissant à la lumière du jour, une deuxième substance avec des pigments réagissant à la lumière noire et une troisième substance avec des pigments à effets,
dans laquelle les pigments sont des substances colorantes qui sont insolubles dans un milieu d'application,
dans laquelle les pigments réagissant à la lumière du jour sont conçus pour être fluorescents sous la lumière du jour et/ou sous la lumière bleue des gyrophares d'un véhicule d'intervention,
dans laquelle les pigments réagissant à la lumière noire sont conçus pour être fluorescents sous la lumière UV des aides techniques, en particulier la lumière noire, et
dans laquelle les pigments à effets sont conçus pour réfléchir la lumière visible et présenter la plus grande densité par rapport aux autres pigments du mélange de matières solides.

8. Utilisation selon la revendication 7,
**caractérisée en ce**
**que** l'agent peut être dispersé par une décharge de pression de CO₂.

9. Utilisation selon la revendication 7 ou 8,
**caractérisée en ce**
**que** pour identifier une appartenance ou une origine de l'agent, les pigments réagissant à la lumière du jour et/ou les pigments réagissant à la lumière noire présentent une combinaison de couleurs spécifique.

10. Utilisation selon l'une des revendications 7 à 9,
**caractérisée en ce**
**que** l'agent peut être tiré et/ou dispersé par un dispositif qui, lorsqu'il est activé, peut être déclenché par une barrière lumineuse, un fil de déclenchement ou un autre capteur.

11. Utilisation selon l'une des revendications 7 à 10 pour marquer et identifier des lieux, des véhicules, des outils, des personnes et/ou des objets.
